# EUROPÄISCHE PATENTANMELDUNG

(11) **EP 0 761 925 A1**
(43) Veröffentlichungstag der Anmeldung: **12.03.1997**
(21) Anmeldenummer: 96112758.6
(22) Anmeldetag: 08.08.1996
(51) Int. Cl.: E06B 9/84, E05D 13/00, F16D 59/00

(54) **Bremsvorrichtung für einen Rauchschutzvorhang, Feuerschutzbehang o. dgl. Behang**

(30) Priorität: 07.09.1995 DE 19533080; 20.03.1996 DE 19610876
(71) Anmelder: Becker Antriebe GmbH, 35764 Sinn (DE)
(72) Erfinder: Keiner, Helmut, 35764 Sinn-Edingen (DE)
(74) Vertreter: Müller, Eckhard, Dr.

(57) **Zusammenfassung**

Es wird eine Bremsvorrichtung für einen Rauchschutzvorhang, Feuerschutzbehang, Rolladen o. dgl. beschrieben, wobei der Behang mit einer elektromotorisch angetriebenen Wickelwelle aufrollbar bzw. abrollbar ist. Der Wickelwelle ist eine vermittels Reibkraft wirkende Bremse (8) zugeordnet, welche bei einer oberhalb der Nenndrehzahl liegenden Drehzahl der Wickelwelle anspricht und ein kontrolliertes Absenken des Behangs gewährleistet. Die Bremse (8) kann dabei in einer Antriebseinheit (18) bzw. einer nachrüstbaren Baueinheit (16) integriert sein.

## Beschreibung

Die Erfindung betrifft eine Bremsvorrichtung für einen Rauchschutzvorhang, Feuerschutzbehang o. dgl. Behang, Rolläden, Rolltore, Garagentore, Rolläden für Verkehrsleitsysteme o. dgl., wobei der Behang mit einer elektromotorisch angetriebenen Wickelwelle aufrollbar bzw. abrollbar ist.

Bei solchen Rauchschutz- oder Brandvorhängen bzw. Rolläden o. dgl. ist es erforderlich, daß im Gefahrenfalle der Behang auch ohne wirksamen elektromotorischen Antrieb selbsttätig in die Schließstellung überführt bzw. abgerollt wird. Der elektromotorische Antrieb besteht in der Regel aus einem elektrischen Motor, insbesondere einem Rohrmotor, der mit einer elektromagnetischen Arbeitsstrombremse gekoppelt ist. Sobald der Motor bspw. durch Rauchsensoren, Wärmesensoren o. dgl. betätigt wird, wird die elektromagnetische Arbeitsstrombremse deaktiviert, d.h. gelöst. Umgekehrt ist die Arbeitsstrombremse aktiviert und damit wirksam, so lange der elektrische Motor nicht betätigt wird.

Da im Gefahrenfall notwendiger Weise die Arbeitsstrombremse deaktiviert ist, um den Rauchschutzvorhang bzw. Feuerschutzbehang o. dgl. in Schließstellung zu führen, besteht die Gefahr, daß bei einem Stromausfall oder bei einer Störung der Motorsteuerung ein unkontrolliertes Herunterfahren des Vorhangs bzw. Behangs in die Schließstellung auftreten kann, wodurch der Behang selbst aufgrund der auftretenden Beschleunigung bzw. Momente selbst beschädigt werden kann. Zudem besteht auch die Gefahr der Verletzung der im Gefahrenfall den Behang passierenden bzw. unter dem Behang hindurcheilenden Personen.

Demgegenüber liegt der Erfindung die Aufgabe zugrunde, eine Bremsvorrichtung der eingangs genannten Art dahingehend weiterzubilden, daß der Vorhang bzw. Behang im Gefahrenfall selbst bei Stromausfall oder bei einer Störung der Steuerung des Antriebs kontrolliert und sicher herabgefahren wird, ohne daß die Gefahr der Beschädigung des Behanges oder eine Verletzungsgefahr für den Behang passierende Personen besteht.

Diese Aufgabe wird nach der Erfindung i. w. dadurch gelöst, daß die Vorrichtung eine vermittels Reibkraft wirkende Bremse aufweist, welche bei einer oberhalb der Nenndrehzahl der Wickelwelle liegenden Drehzahl anspricht und ein kontrolliertes Absinken des Behanges gewährleistet.

Wenn der Rauchschutzvorhang im Gefahrenfall in Schließstellung fahren soll, jedoch der Motor sowie die Arbeitsstrombremse bspw. aufgrund eines Stromausfalls oder sonstigen Störfalls deaktiviert sind, beginnt der Vorhang sich aufgrund des Eigengewichts nach unten zu bewegen. Ab einer gewissen, in Grenzen einstellbaren Drehzahl der Wickelwelle, welche um ein geringfügiges Maß oberhalb der Nenndrehzahl der Wickelwelle liegt, kommt die vermittels Reibkraft wirkende Bremse selbsttätig zum Einsatz. Dadurch, daß die Bremse erst bei Erreichen einer oberhalb der Nenndrehzahl liegenden Drehzahl in Funktion gesetzt wird, ist vermieden, daß bei einem ordnungsgemäßen Herabfahren des Vorhanges mittels des Motors eine Bremswirkung der mittels Reibkraft wirkenden Bremse auftritt.

Von Vorteil ist die Bremse als drehzahlabhängig betätigbare Trommelbremse ausgebildet. Eine derartige Trommelbremse läßt sich konstruktiv unaufwendig in bspw. einem Gehäuserohr, welches auch den Motor und das Getriebe des Antriebs der Wickelwelle aufnimmt, unterbringen.

Nach einer besonders vorteilhaften Weiterbildung der Erfindung ist die Bremse als Fliehkraftbremse ausgebildet. Durch diese Maßnahme ist gewährleistet, daß die Bremswirkung der Bremse erst ab einer gewissen einstellbaren Drehzahl einsetzt.

Von Vorteil ist nach einer weiteren Ausführungsform der Erfindung die Fliehkraftbremse von der Wickelwelle in Drehung versetzbar und weist radial nach außen verschiebbare Fliehgewichte auf, die umfangsseitig mit einem Reibbelag versehen sind.

Dabei hat es sich als günstig erwiesen, daß die Fliehgewichte mittels Zugfedern o. dgl. elastischen Mitteln in einer neutralen Ausgangsposition gehalten sind.

Nach einem weiteren bevorzugten Aspekt der Erfindung gelangen die Fliehgewichte in der Bremsposition in Reibschluß mit der Innenfläche eines Rohrabschnittes bzw. eines Gehäuserohrs. Dabei dient das Gehäuserohr u. U. auch zur Aufnahme weiterer Elemente des Antriebs der Wickelwelle.

Gemäß einer äußerst vorteilhaften Ausgestaltung der Erfindung ist die vermittels Reibkraft wirkende Bremse in dem Antrieb der Wickelwelle des Vorhanges bzw. Behanges integriert. Hierzu ist eine komplette Antriebseinheit vorgesehen, bei der in einem Gehäuserohr ein Standardmotor mit einer Motorwelle, einer Arbeitsstrombremse, die vermittels Reibkraft wirkende Bremse sowie ein Standardgetriebe aufgenommen sind. Die Motorwelle ist einends mit der Arbeitsstrombremse und anderenends mit der vermittels Reibkraft wirkenden mechanischen Bremse gekoppelt, welche ihrerseits mit dem Getriebe in Wirkverbindung steht, wobei eine Abtriebswelle des Getriebes mit der Wickelwelle des Vorhanges o. dgl. koppelbar ist.

Zum Nachrüsten bereits vorhandener, konventioneller Antriebe der Wickelwellen von derartigen Vorhängen o. dgl. ist mit Vorteil eine Baueinheit vorgesehen, bei der in einem Gehäuse die vermittels Reibkraft wirkende Bremse sowie ein Standardgetriebe aufgenommen sind. Das Standardgetriebe steht abtriebsseitig mit der vermittels Reibkraft wirkenden Bremse in Wirkverbindung. Dabei ist eine Abtriebswelle des Standardgetriebes, vorzugsweise mit einem Ende der Wickelwelle koppelbar. Das andere Ende der Wickelwelle steht in Antriebsverbindung mit der herkömmlichen Antriebseinheit. Bevorzugt ist das Getriebe der Baueinheit identisch mit dem Getriebe der konventionellen Antriebseinheit, so daß die Bremse der Baueinheit eine zur Motordrehzahl des Motors der Antriebseinheit vergleichbare Drehzahl bei der Betätigung aufweist. Das der Bremse der Baueinheit zugeordnete Getriebe setzt die Drehzahl der Bremse somit gerade um das Verhältnis wieder hoch, um welches die Motordrehzahl durch das dem Motor zugeordnete Getriebe zwischen Motor und Wickelwelle heruntergesetzt wird. Hierdurch ist die Möglichkeit gegeben, die vermittels Reibkraft wirkende Bremse, insbesondere die Fliehkraftbremse konstruktiv einheitlich auszugestalten, unabhängig davon, ob diese Bremse in einer Baueinheit zum Nachrüsten oder integriert in einer Antriebseinheit eingesetzt wird.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine erste Ausführungsform einer Antriebseinheit mit integrierter Bremse,
- Figur 2: eine mögliche Ausführungsform einer als Fliehkraftbremse ausgebildeten Bremse gemäß Figur 1 und
- Figur 3: eine weitere Ausführungsform einer Baueinheit mit der Bremse zum Nachrüsten oder zur Kombination mit herkömmlichen Antrieben.

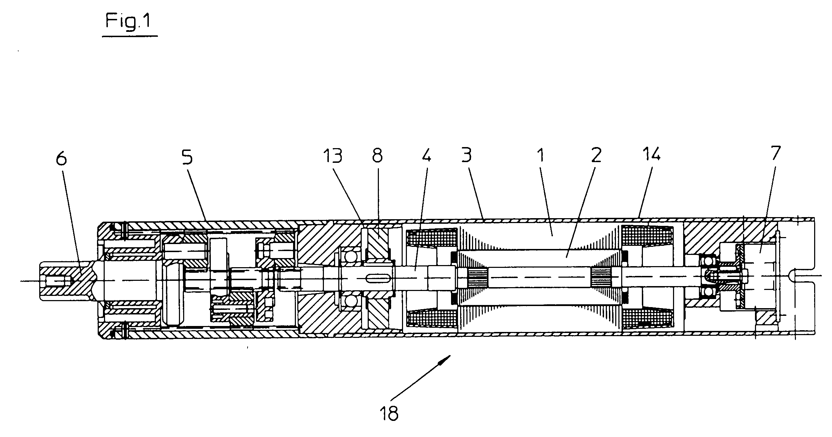

Der Rohrantrieb der Antriebseinheit 18 gemäß Figur 1 weist einen Standardmotor 1 mit einem Rotor 2 und einem Stator 3 auf. Die Motorwelle 4 ist mit einem Untersetzungsgetriebe bzw. einem Standardgetriebe 5 gekoppelt, dessen Abtriebswelle 6 auf eine Wickelwelle des Rauchschutzvorhanges o. dgl. Behang einwirkt und diese bei Betätigung des Standardmotors 1 in Rotation versetzt.

Desweiteren ist eine Arbeitsstrombremse 7 in Form einer elektromagnetischen Bremse vorgesehen, welche bei aktiviertem Standardmotor 1 deaktiviert ist und umgekehrt, insbesondere aber auch im stromlosen Zustand, bspw. bei Stromausfall o. dgl., deaktiviert ist. Im Gefahrenfall kann es jedoch bei einem Zusammenbruch des elektrischen Netzes oder bei einer Störung der Steuerung, insbesondere bei einem Stromausfall an der Antriebseinheit 18 bzw. dem Standardmotor 1 zu einem Herunterfahren des Rauchschutzvorhanges oder Behangs kommen. Um bei einem Stromausfall oder im Gefahrenfall bei deaktivierter Arbeitsstrombremse 7 ein kontrolliertes Herunterfahren des Behanges zu ermöglichen, ist bei dem Ausführungsbeispiel der Erfindung eine Bremse 8 vorgesehen, die in der Antriebseinheit 18 integriert ist und insbesondere direkt mit der Motorwelle 4 in Wirkverbindung steht.

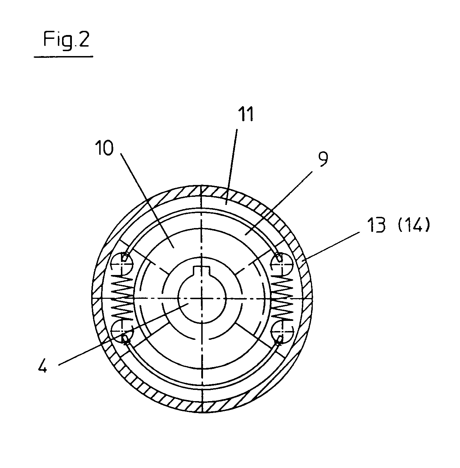

Der Aufbau dieser Bremse 8 ist in Figur 2 näher dargestellt. Die Bremse ist als Fliehkraftbremse ausgebildet und weist mehrere, umfangsseitig angeordnete Fliehgewichte 9 auf, welche zwischen seitlichen, drehfest mit der Motorwelle 4 verbundenen Führungsflächen 10 gehalten sind. Umfangsseitig der Fliehgewichte 9 sind jeweils als Kreissegmente ausgebildete Reibbeläge 11 vorgesehen, die über zwei Federelemente, insbesondere Zugfedern 12, in Anlagestellung an den Fliehgewichten 9 gehalten sind. Es ist in Abwandlung dieser Ausführungsform auch möglich, den Reibbelag 11 unmittelbar auf den Fliehgewichten 9 anzuordnen und die Zugfedern 12 an den Fliehgewichten 9 bzw. dem Reibbelag 11 angreifen zu lassen.

Wenn der Rauchschutzvorhang o. dgl. im Gefahrenfall in Schließstellung fahren soll, jedoch der Antriebsmotor 1 sowie die Arbeitsstrombremse 7 aufgrund bspw. eines Stromausfalls deaktiviert sind, beginnt der Vorhang sich aufgrund des Eigengewichts nach unten zu bewegen. Ab einer bestimmten oberen Drehzahl der Motorwelle 4 kommt die Bremse 8, insbesondere die Fliehkraftbremse, zur Wirkung. Der Reibbelag 11 wird dann vermittels der Fliehgewichte 9 radial nach außen bewegt und tritt in Reibschluß mit der Innenfläche eines Rohrelements. Es ist in Abwandlung zu Figur 1 auch möglich, daß der Reibbelag 11 unmittelbar mit dem Gehäuserohr 14 der Antriebseinheit 18 in Wirkstellung tritt. Die Bremse 8 wird erst bei Erreichen einer oberhalb der Nenndrehzahl des Motors 1 liegenden Drehzahl in Funktion gesetzt. Bei einer niedrigeren Drehzahl würde es nämlich anderenfalls bei normalen Betrieb des Standardmotors 1 ohne Stromausfall zu einer unerwünschten Bremswirkung der Bremse 8 kommen.

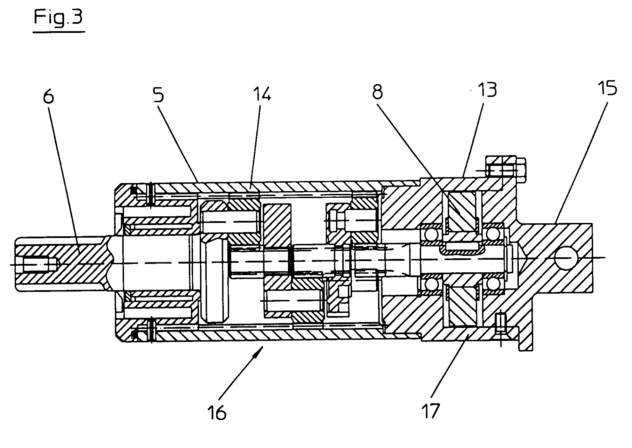

Bei der Ausführungsform gemäß Figur 3 ist die Bremse 8 mit einem zusätzlichen Standardgetriebe 5 in einer nachrüstbaren Baueinheit 16 integriert. Die Komponenten sind in einem Gehäuse 17 aufgenommen, das einends ein Wandlager 15 und anderenends eine mit dem Standardgetriebe 5 in Wirkverbindung stehende Abtriebswelle 6 aufweist. Eine solche Baueinheit 16 gemäß der Ausführungsform der Figur 3 kann sich bspw. aus Platzgründen, insbesondere aber zum einfacheren Nachrüsten oder auch aus Kostengründen empfehlen. Die Abtriebswelle 6 dieser Baueinheit 16 ist mit einem Endabschnitt der Wickelwelle verbindbar. Am anderen Endabschnitt der Wickelwelle ist ein herkömmlicher Motorantrieb, z.B. ein Standardmotor 1 mit einem Standardgetriebe 5 angekoppelt. Der der Abtriebswelle 6 abgewandte Abschnitt der Baueinheit 16 ist bevorzugt als Wandlager 15 zur Lagerung der Wickelwelle bzw. der Baueinheit 16 ausgebildet.

Bei dieser Ausführungsform der Figur 3 ist das vorgeschaltete Standardgetriebe 5 aus folgenden Gründen vorgesehen: Das Standardgetriebe 5 der Baueinheit 16 sorgt dafür, daß die Drehzahl der Wickelwelle über die Abtriebswelle 6 und das Standardgetriebe 5 auf solche Drehzahlen der Bremse 8 heraufgesetzt wird, die zumindestens in etwa der Drehzahl des in der herkömmlichen Antriebseinheit untergebrachten Standardmotors 1 entsprechen. Diese Drehzahl des Standardmotors 1 in der herkömmlichen Antriebseinheit wird zunächst über ein Standardgetriebe 5 herabgesetzt auf die Drehzahl der Wickelwelle, wobei das in der Baueinheit 16 angeordnete Standardgetriebe 5 gerade dazu dient, diese Untersetzung wieder heraufzusetzen. Aufgrund dieser Maßnahme ist es möglich, praktisch ein und dieselbe Bremse 8 in einer als Nachrüsteinheit vorgesehenen Baueinheit 16 oder auch in einer Antriebseinheit 18, in der die Bremse 8 bereits integriert ist, einzusetzen.

Bei der bevorzugt als Fliehkraftbremse ausgebildeten Bremse 8 müssen die Fliehgewichte 9 sowie das Gewicht des Reibbelages 11 im Zusammenwirken mit der Federkraft bzw. Federkonstanten der Zugfedern 12 so aufeinander abgestimmt, daß die Bremse 8 erst bei solchen Drehzahlen der Wickelwelle in Funktion tritt, die eine oberhalb der Nenndrehzahl des Motors 1 liegenden Drehzahl entsprechen. Im Gefahrenfall wird die Drehzahl der Wickelwelle bei der Abwärtsbewegung des Vorhanges o. dgl. durch die Fliehkraftbremse somit auf eine bestimmte Drehzahl begrenzt. Diese Drehzahlbegrenzung ist bei solchen Werten angesiedelt, die unter Berücksichtigung des Übersetzungsverhältnisses des Standardgetriebes oberhalb der Nenndrehzahl des Standardmotors 1 liegen.

### Bezugszeichenliste

- 1: - Standardmotor
- 2: - Rotor
- 3: - Stator
- 4: - Motorwelle
- 5: - Standardgetriebe
- 6: - Abtriebswelle
- 7: - Arbeitsstrombremse
- 8: - Bremse
- 9: - Fliehgewicht
- 10: - Führungsblech
- 11: - Reibbelag
- 12: - Zugfeder
- 13: - Rohrabschnitt
- 14: - Gehäuserohr
- 15: - Wandlager
- 16: - Baueinheit
- 17: - Gehäuse
- 18: - Antriebseinheit

## Patentansprüche

1. Bremsvorrichtung für einen Rauchschutzvorhang, Rolläden, Rolltore, Garagentore, Feuerschutzbehang o. dgl. Behang, wobei der Behang mit einer elektromotorisch angetriebenen Wickelwelle aufrollbar bzw. abrollbar ist, dadurch gekennzeichnet, daß die Vorrichtung eine vermittels Reibkraft wirkende Bremse (8) aufweist, welche bei einer oberhalb der Nenndrehzahl liegenden Drehzahl der Wickelwelle anspricht und ein kontrolliertes Absenken des Behangs gewährleistet.

2. Bremsvorrichtung nach Anspruch 1, dadurch gekennzeichnet, daß die Bremse (8) als drehzahlabhängig betätigbare Trommelbremse ausgebildet ist.

3. Bremsvorrichtung nach einem der vorhergehenden Ansprüche, dadurch gekennzeichnet, daß die Bremse (8) als Fliehkraftbremse ausgebildet ist.

4. Bremsvorrichtung nach Anspruch 3, dadurch gekennzeichnet, daß die Fliehkraftbremse von der Wickelwelle in Drehung versetzbar ist und radial nach außen verschiebbare Fliehgewichte (9) aufweist, die umfangsseitig mit einem Reibbelag (11) versehen sind.

5. Bremsvorrichtung nach Anspruch 4, dadurch gekennzeichnet, daß die Fliehgewichte (9) mittels Zugfedern (12) o. dgl. elastischen Mitteln in einer neutralen Ausgangsposition gehalten sind.

6. Bremsvorrichtung nach einem der vorhergehenden Ansprüche 4 oder 5, dadurch gekennzeichnet, daß die Fliehgewichte (9) in der Bremsposition in Reibschluß mit der Innenfläche eines Rohrelements (13) bzw. eines Gehäuserohrs (14) gelangen.

7. Bremsvorrichtung nach einem der vorhergehenden Ansprüche, gekennzeichnet, durch eine Antriebseinheit (18), bei der in einem Gehäuserohr (14) ein Standardmotor (1) mit einer Motorwelle (4), eine Arbeitsstrombremse (7), die Bremse (8) sowie ein Standardgetriebe (5) aufgenommen sind, wobei die Motorwelle (4) einends mit der Arbeitsstrombremse (7) und anderenends mit der Bremse (8) gekoppelt ist, die Bremse (8) mit dem Getriebe (5) in Wirkverbindung steht und eine Abtriebswelle (6) des Getriebes (5) mit der Wickelwelle des Vorhangs koppelbar ist.

8. Bremsvorrichtung nach einem der Ansprüche 1 bis 7, gekennzeichnet durch eine Baueinheit (16), bei der in einem Gehäuse (17) die Bremse (8) sowie ein Standardgetriebe (5) aufgenommen sind, das Standardgetriebe (5) abtriebsseitig mit der Bremse (8) in Wirkverbindung steht und eine Abtriebswelle (6) des Standardgetriebes (5) mit der Wickelwelle koppelbar ist.
